# EUROPEAN PATENT APPLICATION

(11) **EP 4 770 203 A1**
(43) Date of publication of application: **01.07.2026**
(21) Application number: 25224896.8
(22) Date of filing: 18.12.2025
(51) Int. Cl.: H04W 48/16, H04W 48/10, H04W 76/15, H04W 88/06, H04W 84/12

(54) **MULTI-LINK OPERATION (MLO) OPTIMIZATIONS**

(30) Priority: 24.12.2024 US 202419001012
(71) Applicant: Arista Networks, Inc., Santa Clara, CA 95054 (US)
(72) Inventor: BEHERA, Nihar Ranjan, Pune (IN); MALLYA, Nishant Nityanand, Pune (IN); PAREKH, Jatin Jayendra, Mumbai (IN)
(74) Representative: Hoffmann Eitle

(57) **Abstract**

Techniques for optimizing Multi-Link Operation (MLO), and more particularly for increasing the likelihood that a Wi-Fi client will select the best (or in other words, least loaded) links for establishing an MLO connection with a Wi-Fi AP, are provided. In certain embodiments, these optimizations can result in significantly improved Wi-Fi performance between the client and the AP in scenarios where one or more of the AP's MLO links are heavily loaded.

## Description

### BACKGROUND

Wi-Fi is a wireless networking technology that has evolved over several versions and is defined in a set of IEEE (Institute of Electrical and Electronics Engineers) standards known as the 802.11x standards. The most recent version of this technology is Wi-Fi 7, which is defined in the 802.11be standard. Earlier versions include Wi-Fi 6 (802.11ax), Wi-Fi 5 (802.11ac), and so on.

Multi-Link Operation (MLO) is a feature introduced in Wi-Fi 7 that enables a Wi-Fi client to connect to a Wi-Fi access point (AP) using multiple links (across different frequency bands) simultaneously, rather than using only a single link. By supporting multiple concurrent links, MLO provides various benefits including increased throughput, reduced latency, and improved reliability.

### BRIEF DESCRIPTION OF THE DRAWINGS

With respect to the discussion to follow and in particular to the drawings, it is stressed that the particulars shown represent examples for purposes of illustrative discussion and are presented in the cause of providing a description of principles and conceptual aspects of the present disclosure. In this regard, no attempt is made to show implementation details beyond what is needed for a fundamental understanding of the present disclosure. The discussion to follow, in conjunction with the drawings, makes apparent to those of skill in the art how embodiments in accordance with the present disclosure may be practiced. Similar or same reference numbers may be used to identify or otherwise refer to similar or same elements in the various drawings and supporting descriptions. In the accompanying drawings:
FIG. 1 depicts an example Wi-Fi deployment in accordance with certain embodiments of the present disclosure.
FIGS. 2, 3, and 4 depict MLO link suppression workflows in accordance with certain embodiments of the present disclosure.
FIG. 5 depicts an MLO admission control workflow in accordance with certain embodiments of the present disclosure.
FIG. 6 depicts an example Wi-Fi AP in accordance with certain embodiments of the present disclosure.

### DETAILED DESCRIPTION

In the following description, for purposes of explanation, numerous examples and details are set forth in order to provide an understanding of embodiments of the present disclosure. Particular embodiments as expressed in the claims may include some or all of the features in these examples, alone or in combination with other features described below, and may further include modifications and equivalents of the features and concepts described herein.

Embodiments of the present disclosure are directed to techniques for optimizing MLO, and more particularly for increasing the likelihood that a Wi-Fi client will select the best (or in other words, least loaded) links for establishing an MLO connection with a Wi-Fi AP. In certain embodiments, these optimizations can result in significantly improved Wi-Fi performance between the client and the AP in scenarios where one or more of the AP's MLO links are heavily loaded.

### 1. Example Wi-Fi Deployment and Solution Overview

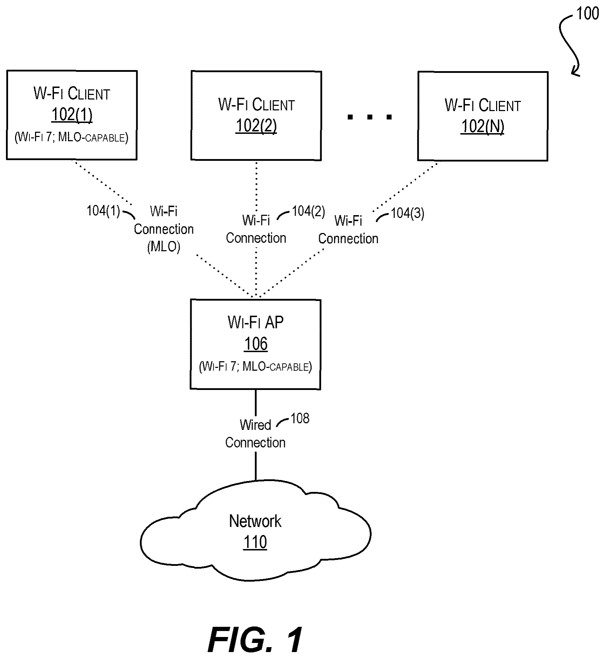

FIG. 1 is a simplified block diagram of an example Wi-Fi deployment 100 in which the techniques of the present disclosure may be implemented. As shown, Wi-Fi deployment 100 includes a plurality of Wi-Fi clients 102(1)-(N) that are coupled via corresponding wireless (Wi-Fi) connections 104(1)-(N) to a Wi-Fi AP 106. Wi-Fi AP 106 is in turn coupled via a wired (e.g., Ethernet) connection 108 to a network 110. Generally speaking, Wi-Fi AP 106 serves as a bridge between Wi-Fi clients 102(1)-(N) and network 110, thereby enabling the clients to communicate wirelessly with the network (and with each other).

In this example, Wi-Fi AP 106 and Wi-Fi client 102(1) are both MLO-capable Wi-Fi 7 devices and Wi-Fi connection 104(1) between these devices is specifically an MLO connection. This means that Wi-Fi connection 104(1) is composed of multiple wireless communication paths (i.e., links) between Wi-Fi AP 106 and Wi-Fi client 102(1), where each link utilizes radio waves in one of the three frequency bands supported by Wi-Fi 7 (2.4 gigahertz (GHz), 5 GHz, and 6 GHz). For example, Wi-Fi connection 104(1) may be composed of any of the following combinations of links:
- One 2.4 GHz link and one 5 GHz link
- One 2.4 GHz link and one 6 GHz link
- One 5 GHz link and one 6 GHz link
- One 2.4 GHz link, one 5 GHz link, and one 6 GHz link

This also means that Wi-Fi AP 106 and Wi-Fi client 102(1) can communicate with each other using the multiple links of Wi-Fi connection 104(1) concurrently, resulting in several benefits. For example, Wi-Fi AP 106 and Wi-Fi client 102(1) can aggregate the bandwidth across the multiple links to achieve higher bandwidth than possible via any individual link alone, route traffic for latency-sensitive applications across the least-congested link, load balance traffic across the multiple links, implement link failover (in case one link experiences degradation or interference), and so on.

Conventionally, an MLO-capable Wi-Fi client like client 102(1) establishes an MLO connection with an MLO-capable Wi-Fi AP like AP 106 via a process that involves three phases: scanning, authentication, and association. Each of these phases are described below with respect to Wi-Fi client 102(1) and Wi-Fi AP 106. It is assumed that Wi-Fi AP 106 serves 2.4 GHz, 5 GHz, and 6 GHz links (which means that the AP actively supports connections on these links) and all three of these links are MLO links (i.e., capable of being used for MLO). It is also assumed that Wi-Fi client 102(1) has MLO enabled on the 2.4 GHz, 5 GHz, and 6 GHz frequency bands, which means that the client can establish an MLO connection with a Wi-Fi AP using any combination of these bands.
1. Scanning: In this phase, Wi-Fi client 102(1) discovers nearby Wi-Fi APs (including Wi-Fi AP 106) in order to identify the best AP to connect to. Scanning can be carried out by the client in an active or passive manner.
   a. With active scanning, Wi-Fi client 102(1) sends out a probe request on one of the 2.4 GHz, 5 GHz, or 6 GHz frequency bands to all nearby Wi-Fi APs (in the case of a broadcast probe request) or to a specific Wi-Fi AP (in the case of a unicast probe request). This probe request is a message that includes information regarding the capabilities of the client, including the fact that it has MLO enabled on the 2.4 GHz, 5 GHz, and 6 GHz frequency bands. Each Wi-Fi AP that receives the probe request replies with a probe response including information regarding the capabilities of that AP. For example, if the probe request is sent by Wi-Fi client 102(1) on the 2.4 GHz frequency band and is received by Wi-Fi AP 106, Wi-Fi AP 106 will reply with a probe response that indicates, among other things, that it supports MLO on its 2.4 GHz link. This probe response will also identify, in a reduced neighbor report (RNR) element (i.e., field) of the response, Wi-Fi AP 106's 5 GHz and 6 GHz links as additional MLO links served by the AP.
   b. With passive scanning, Wi-Fi client 102(1) listens for beacon frames that are transmitted periodically by nearby Wi-Fi APs on each link served by that AP. Like the probe response, each beacon frame includes information regarding the capabilities of the transmitting Wi-Fi AP. For example, a beacon frame that is transmitted by Wi-Fi AP 106 on its 2.4 GHz link will indicate that it supports MLO on that link and will also identify, in a reduced neighbor report (RNR) element of the beacon frame, Wi-Fi AP 106's 5 GHz and 6 GHz links as additional MLO links served by the AP.
2. Authentication: Upon discovering Wi-Fi AP 106 via active or passive scanning and deciding to connect to Wi-Fi AP 106, Wi-Fi client 102(1) and Wi-Fi AP 106 engage in an authentication process using an appropriate authentication protocol.
3. Association: Assuming authentication is successful, Wi-Fi client 102(1) sends an association request to Wi-Fi AP 106 on one of the MLO links served by the AP, where the association request indicates that Wi-Fi client 102(1) would like to connect to, or in other words associate with, Wi-Fi AP 106 via MLO using (i.e., on) that link and one or more other MLO links served by the AP, as learned from received probe response(s) or beacon frame(s). This type of association request is referred to herein as an MLO association request. In response to the MLO association request, Wi-Fi AP 106 returns an association response that either (a) accepts (i.e., admits) Wi-Fi client 102(1) on the link and identifies, in a multi-link element (MLE) of the association response, the other MLO links on which the client is admitted (resulting in the establishment of an MLO connection), or (b) rejects the MLO association request. If the request is rejected, the association response may include a status code indicating one of a limited number of reasons for the rejection, as defined in the existing 802.11x standards.

One issue with the conventional workflow above is that Wi-Fi client 102(1) is in control of selecting, from among the three MLO links served by Wi-Fi AP 106, which links it will include in the MLO association request sent to the AP (and thus, which links will be used to establish Wi-Fi/MLO connection 104(1)). For example, Wi-Fi client 102(1) may submit an MLO association request that specifies a combination of Wi-Fi AP 106's 2.4 GHz and 5 GHz links, a combination of Wi-Fi AP 106's 2.4 GHz and 6 GHz links, a combination of Wi-Fi AP 106's 5 GHz and 6 GHz links, or a combination of Wi-Fi AP 106's 2.4 GHz, 5 GHz, and 6 GHz links. This is problematic because one or more of these MLO links may be loaded (or in other words, be experiencing a significant amount of usage) at the time the MLO association request is made. Thus, if Wi-Fi client 102(1) associates with Wi-Fi AP 106 using a set of MLO links that includes a loaded link, the performance of the resulting MLO connection will be degraded, resulting in a sub-optimal experience for the client.

To address the foregoing and other similar problems, embodiments of the present disclosure provide at least two approaches that may be implemented by an MLO-capable Wi-Fi AP for guiding/steering an MLO-capable Wi-Fi client towards selecting the best (i.e., least loaded) links for establishing an MLO connection with the AP. In one set of embodiments, these approaches may be implemented in software (i.e., program code) that is executable by one or more processors, such as a central processing unit (CPU), of the Wi-Fi AP. In alternative embodiments, some or all of the functionality of these approaches may be implemented partially or entirely in hardware. Further, these approaches may be implemented separately or in combination with each other.

At a high level, the first approach (referred to as MLO link suppression) employs several techniques for hiding, from the Wi-Fi client, an MLO link served by the Wi-Fi AP that is determined to be loaded, thereby reducing the likelihood that the client will attempt to associate with the AP on that particular link. The second approach (referred to as MLO admission control) involves rejecting an MLO association request from the Wi-Fi client for associating on a set of MLO links that comprises a loaded link and including, in the association response, a new rejection status code that is not currently defined in the existing 802.11x standards. This new rejection status code indicates to the Wi-Fi client that it is attempting to associate on a loaded link and, in some embodiments, can identify other, less loaded MLO links served by the Wi-Fi AP that should be selected by the client instead.

The remaining sections of the present disclosure provide additional details regarding the implementation of the MLO link suppression and MLO admission control approaches according to certain embodiments. It should be appreciated that FIG. 1 and the foregoing high-level solution description are illustrative and not intended to be limiting. For example, although FIG. 1 shows Wi-Fi AP 106 and Wi-Fi client 102(1) as specifically being Wi-Fi 7 devices, the approaches of the present disclosure may be implemented by any MLO-capable Wi-Fi AP for guiding/steering the MLO link selection performed by any MLO-capable Wi-Fi client, regardless of whether those devices support Wi-Fi 7 or another (e.g., not yet released) version of Wi-Fi.

### 2. MLO Link Suppression

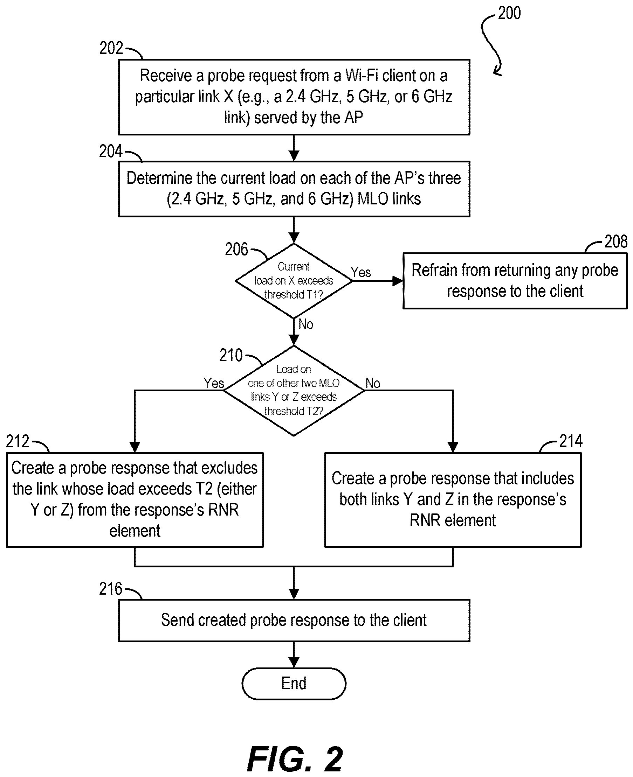

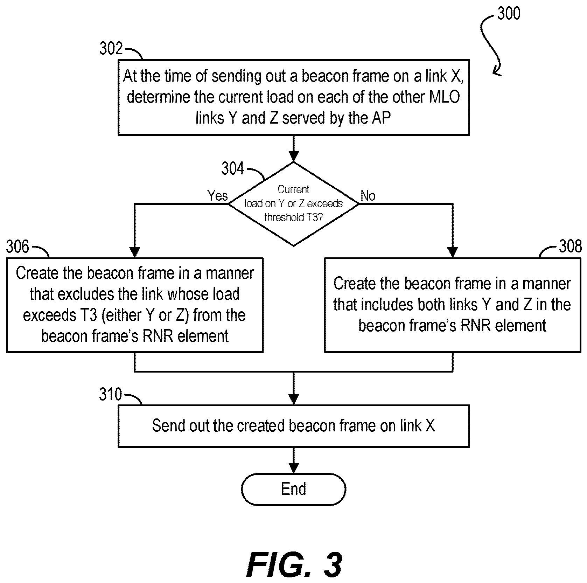

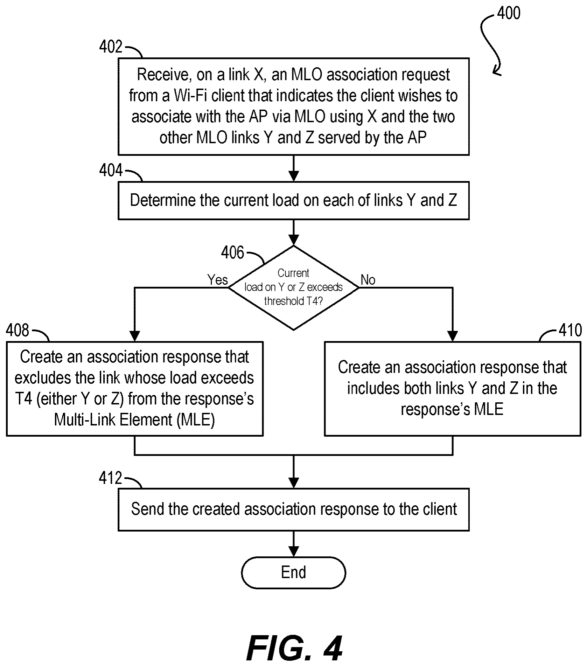

FIGS. 2, 3, and 4 depict workflows 200, 300, and 400 respectively that can be executed by an MLO-capable Wi-Fi AP (like Wi-Fi AP 106 of FIG. 1) for implementing the MLO link suppression approach according to certain embodiments. In particular, workflow 200 of FIG. 2 presents a first technique/aspect of this approach that involves hiding a loaded MLO link from an MLO-capable Wi-Fi client (like Wi-Fi client 102(1) of FIG. 1) by removing the link from the RNR element of a probe response, workflow 300 of FIG. 3 presents a second technique/aspect of this approach that involves hiding a loaded MLO link from the Wi-Fi client by removing the link from the RNR element of a beacon frame, and workflow 400 of FIG. 4 presents a third technique/aspect of this approach that involves hiding a loaded MLO link from the Wi-Fi client by removing the link from the MLE of an association response. By hiding a loaded MLO link from the Wi-Fi client in these various ways, it is significantly less likely that the client will select that loaded link for inclusion in an MLO association request sent to the Wi-Fi AP, thereby avoiding the performance problems that can result from such a scenario. These workflows assume that the Wi-Fi AP serves three (2.4 GHz, 5 GHz, and 6 GHz) MLO links and that the Wi-Fi client has MLO enabled on the 2.4 GHz, 5 GHz, and 6 GHz frequency bands.

In one set of embodiments, the Wi-Fi AP may implement all three techniques/aspects of the MLO link suppression approach together. In other embodiments, the Wi-Fi AP may selectively implement a subset of these techniques/aspects, potentially based on one or more settings configured by a user or administrator of the AP.

Starting with workflow 200, at step 202 the Wi-Fi AP can receive, during the scanning phase mentioned previously, a probe request from the Wi-Fi client on a particular link X served by the AP (i.e., either the 2.4 GHz, 5 GHz, or 6 GHz link), where the probe request indicates that the client has MLO enabled on the 2.4 GHz, 5 GHz, and 6 GHz frequency bands.

In response, the Wi-Fi AP can determine the current load on each of its three (2.4 GHz, 5 GHz, and 6 GHz) MLO links (step 204). The Wi-Fi AP can make this determination in different ways, such as by evaluating the current channel utilization on the link, detecting the amount of interference currently present on the link, and so on.

At step 206, the Wi-Fi AP can check whether the determined current load on link X exceeds a first load threshold T1. If the answer is yes, the Wi-Fi AP can determine that it should not return a probe response to the Wi-Fi client (step 208) and the workflow can end. The Wi-Fi AP does not return a probe response here because the AP is likely unable to serve the client at all in this scenario.

On the other hand, if the answer at step 206 is no, the Wi-Fi AP can further check whether the determined current load on one of the other two MLO links served by the AP (denoted as links Y and Z) exceeds a second load threshold T2 (step 210). This second load threshold T2 may be the same as or different from the first load threshold T1.

If the answer at step 210 is yes, the Wi-Fi AP can create a probe response that excludes the link (either Y or Z) whose determined current load exceeds T2 from the response's RNR element (step 212), thereby hiding this MLO link from the Wi-Fi client and thus steering the client away from selecting this link during the association phase. Alternatively, if the answer at step 210 is no, the Wi-Fi AP can create a probe response that includes both links Y and Z in the response's RNR element (step 214). Although not shown, in the case where links Y and Z both exceed T2, the Wi-Fi AP can exclude the link with the higher load.

Finally, at step 216, the Wi-Fi AP can return the created probe response to the Wi-Fi client and the workflow can end.

Turning now to workflow 300, at the time of sending out a beacon frame on a particular link X (i.e., either the 2.4 GHz, 5 GHz, or 6 GHz link) served by the Wi-Fi AP, the AP can determine the current load on each of its other two MLO links Y and Z (step 302). For example, if the beacon frame will be sent out on the Wi-Fi AP's 2.4 GHz link, the AP can determine the current loads on its 5 GHz and 6 GHz links.

At step 304, the Wi-Fi AP can check whether the determined current load on link Y or link Z exceeds a third load threshold T3. This third load threshold T3 may be the same as or different from thresholds T1 and/or T2.

If the answer at step 304 is yes, the Wi-Fi AP can create the beacon frame in a manner that excludes the link (either Y or Z) whose determined current load exceeds T3 in the beacon frame's RNR element (step 306), thereby hiding this MLO link from the Wi-Fi client and thus steering the client away from selecting this link during the association phase. Alternatively, if the answer at step 304 is no, the Wi-Fi AP can create the beacon frame in a manner that includes both links Y and Z in the beacon frame's RNR element (step 308). Although not shown, in the case where links Y and Z both exceed T3, the Wi-Fi AP can exclude the link with the higher load.

Finally, at step 310, the Wi-Fi AP can send out the created beacon frame on link X and the workflow can end.

Turning now to workflow 400, at step 402 the Wi-Fi AP can receive, during the association phase, an MLO association request from the Wi-Fi client on a particular link X served by the AP (i.e., either the 2.4 GHz, 5 GHz, or 6 GHz link), where the MLO association request indicates that the client has MLO enabled on the 2.4 GHz, 5 GHz, and 6 GHz frequency bands and wishes to associate with the AP via MLO using link X and the other two MLO links Y and Z served by the AP. For example, the MLO association request may be received on the Wi-Fi AP's 2.4 GHz link and indicate that the Wi-Fi client wishes to associate using the AP's 2.4 GHz, 5 GHz, and 6 GHz links (resulting in an MLO connection comprising all three frequency bands).

In response, the Wi-Fi AP can determine the current load on each of links Y and Z (step 404) and check whether the determined current load on link Y or link Z exceeds a fourth load threshold T4 (step 406). This fourth load threshold T4 may be the same as or different from thresholds T1, T2, and/or T3.

If the answer at step 406 is yes, the Wi-Fi AP can create an association response that excludes the link (either Y or Z) whose determined current load exceeds T4 in the response's MLE (step 408), thereby hiding this MLO link from the Wi-Fi client and thus steering the client away from using this link. Alternatively, if the answer at step 406 is no, the Wi-Fi AP can create an association response that includes both links Y and Z in the response's MLE (step 410). Although not shown, in the case where links Y and Z both exceed T4, the Wi-Fi AP can exclude the link with the higher load.

Finally, at step 412, the Wi-Fi AP can return the created association response to the Wi-Fi client and the workflow can end.

It should be noted that if the association request received at step 402 indicates that the Wi-Fi client only has MLO enabled on two out of the three frequency bands (or that the client does not support MLO at all), in certain embodiments the Wi-Fi AP can accept the association request per its standard functionality (i.e., without excluding any links based on their current loads).

### 3. MLO Admission Control

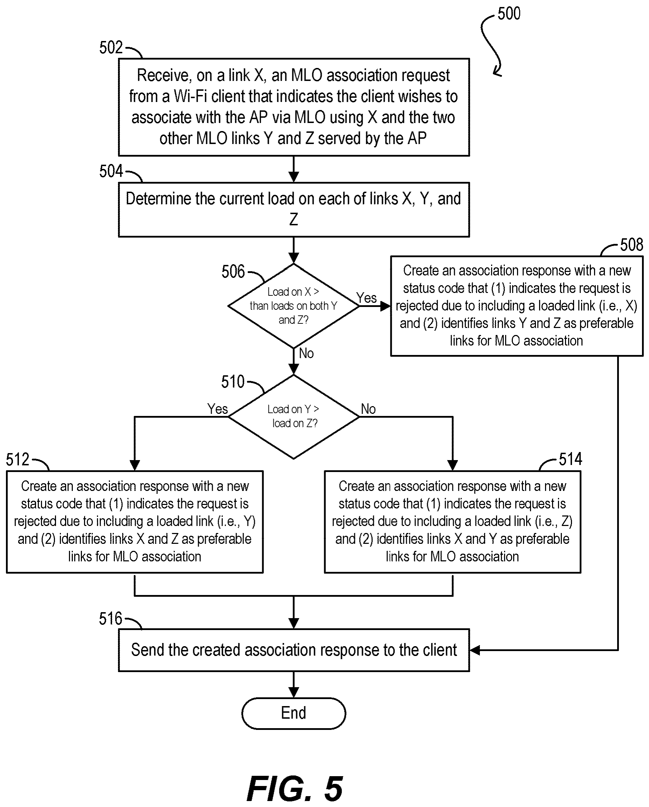

FIG. 5 depicts a workflow 500 that can be executed by an MLO-capable Wi-Fi AP (like Wi-Fi AP 106 of FIG. 1) for implementing the MLO admission control approach with respect to an MLO-enabled Wi-Fi client (like Wi-Fi client 102(1) of FIG. 1) according to certain embodiments. This approach involves the introduction of a new association response status code in the 802.11x standards (and more specifically, in the Wi-Fi 7 (802.11be) standard) that enables the Wi-Fi client to infer the presence of better (i.e., less loaded) MLO links on which the client can associate.

Starting with step 502, the Wi-Fi AP can receive, during the association phase, an MLO association request from the Wi-Fi client on a particular link X served by the AP (i.e., either the 2.4 GHz, 5 GHz, or 6 GHz link), where the MLO association request indicates that the client has MLO enabled on the 2.4 GHz, 5 GHz, and 6 GHz frequency bands and wishes to associate with the AP via MLO using link X and the other two MLO links Y and Z served by the AP. For example, the MLO association request may be received on the Wi-Fi AP's 2.4 GHz link and indicate that the Wi-Fi client wishes to associate using the AP's 2.4 GHz, 5 GHz, and 6 GHz links (resulting in an MLO connection comprising all three frequency bands).

In response, the Wi-Fi AP can determine the current load on each of links X, Y, and Z (step 504) and check whether the determined current load on link X is greater than the determined current loads on both links Y and Z (step 506). If the answer is yes, the Wi-Fi AP can create an association response that includes the new association response status code mentioned above, where this new association response status code (1) indicates that the MLO association request is rejected because it includes a loaded MLO link (i.e., link X) and (2) identifies links Y and Z as a preferable set of links for MLO association (or in other words, for establishing an MLO connection to the AP) (step 508).

Alternatively, if the answer at step 506 is no, the Wi-Fi AP can further check whether the determined current load on link Y is greater than the determined current load on link Z (step 510). If the answer is yes, the Wi-Fi AP can create an association response that includes the new association response status code mentioned above, where this new association response status code (1) indicates that the MLO association request is rejected because it includes a loaded MLO link (i.e., link Y) and (2) identifies links X and Z as a preferable set of links for establishing an MLO connection to the AP (step 512).

Alternatively, if the answer at step 510 is no, the Wi-Fi AP can create an association response that includes the new association response status code mentioned above, where this new association response status code (1) indicates that the MLO association request is rejected because it includes a loaded MLO link (i.e., link Z) and (2) identifies links X and Y as a preferable set of links for establishing an MLO connection to the AP (step 514).

Finally, at step 516, the Wi-Fi AP can return the created association response to the Wi-Fi client and the workflow can end.

### 4. Example Wi-Fi AP

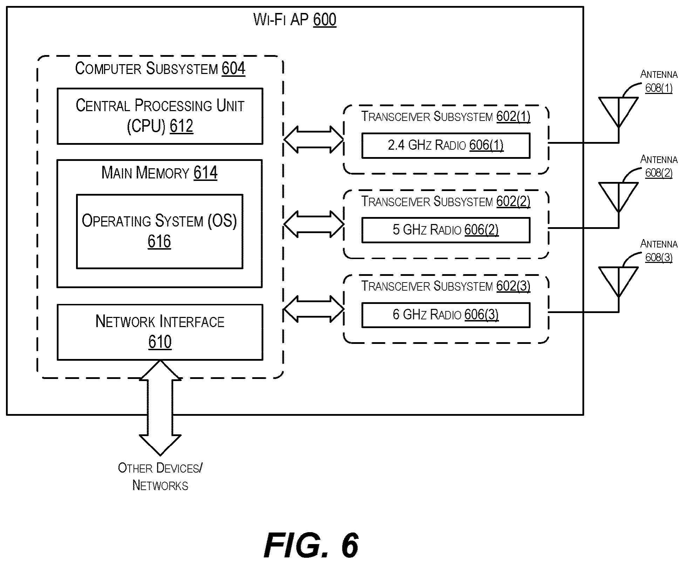

FIG. 6 is a simplified block diagram illustrating the architecture of an example Wi-Fi AP 600 according to certain embodiments. Wi-Fi AP 600 may be used to implement any of the Wi-Fi APs described in the foregoing sections, including Wi-Fi AP 106 of FIG. 1. As shown, Wi-Fi AP 600 comprises a set of transceiver subsystems 602(1)-(3) that are communicatively coupled with a computer subsystem 604.

Each transceiver subsystem 602 includes, among other things, a radio 606 that transmits and receives RF signals via a corresponding antenna 608. Each radio 606 supports a particular Wi-Fi frequency band and is configured to operate on one or more channels (i.e., frequency ranges) in that frequency band, thereby enabling Wi-Fi communication between Wi-Fi AP 600 and other Wi-Fi devices (e.g., clients and other APs). For example, transceiver subsystem 602(1) has a 2.4 GHz radio 606(1) that is configured to operate on one or more channels in the 2.4 GHz frequency band (which corresponds to a 2.4 GHz link served by AP 600), transceiver subsystem 602(2) has a 5 GHz radio 606(2) that is configured to operate on one or more channels in the 5 GHz frequency band (which corresponds to a 5 GHz link served by AP 600), and transceiver subsystem 602(3) has a 6 GHz radio 606(3) that is configured to operate on one or more channels in the 6 GHz frequency band (which corresponds to a 6 GHz link served by AP 600).

Computer subsystem 604 of Wi-Fi AP 600 includes, among other things, a network interface 610, a central processing unit (CPU) 612, and a main memory (e.g., random-access memory or RAM) 614. Network interface 610 connects Wi-Fi AP 600 to a wired network, typically through one or more Ethernet ports. CPU 612 is a general purpose processor that is responsible for managing the configuration and operation of Wi-Fi AP 600 and its constituent components, including transceiver subsystems 602(1)-(3). CPU 612 performs these tasks under the direction of an operating system (OS) 616 that runs on CPU 612 from main memory 614. In certain embodiments, OS 616 may include program code that is configured to carry out the MLO link suppression and MLO admission control approaches of the present disclosure. This program code may be held in main memory 614 and executed by CPU 612.

The above description illustrates various embodiments of the present disclosure along with examples of how aspects of these embodiments may be implemented. The above examples and embodiments should not be deemed to be the only embodiments and are presented to illustrate the flexibility and advantages of the present disclosure as defined by the following claims. For example, although certain embodiments have been described with respect to particular workflows and steps, it should be apparent to those skilled in the art that the scope of the present disclosure is not strictly limited to the described workflows and steps. Steps described as sequential may be executed in parallel, order of steps may be varied, and steps may be modified, combined, added, or omitted. As another example, although certain embodiments may have been described using a particular combination of hardware and software, it should be recognized that other combinations of hardware and software are possible, and that specific operations described as being implemented in hardware can also be implemented in software and vice versa.

The specification and drawings are, accordingly, to be regarded in an illustrative rather than restrictive sense. Other arrangements, embodiments, implementations, and equivalents will be evident to those skilled in the art and may be employed without departing from the spirit and scope of the present disclosure as set forth in the following claims.

The disclosure in the application also includes the following numbered clauses:
1. A method performed by a Wi-Fi access point (AP) that supports Multi-Link Operation (MLO) on at least three links served by the Wi-Fi AP, the at least three links corresponding to at least three different frequency bands, the method comprising:
   receiving, from a Wi-Fi client, a probe request on a first link in the at least three links;
   determining a current load on each of the at least three links; and
   upon determining that the current load on a second link or a third link in the at least three links exceeds a first threshold:
      creating a probe response that excludes the second link or the third link from a Reduced Neighbor Report (RNR) element of the probe response; and
      sending the probe response to the Wi-Fi client.
2. The method of clause 1 further comprising, upon determining that the current load on the second link and the current load on the third link do not exceed the first threshold:
   creating the probe response in a manner that includes the second link and the third link in the RNR element; and
   sending the probe response to the Wi-Fi client.
3. The method of clause 1 or clause 2 further comprising, upon determining that the current load on the first link exceeds a second threshold:
   determining to not send any probe response to the Wi-Fi client.
4. The method of any preceding clause wherein determining the current load on each of the at least three links comprises:
   evaluating a current channel utilization on each of the at least three links; and
   detecting an amount of interference currently present on each of the at least three links.
5. The method of any preceding clause further comprising:
   sending out a beacon frame on the first link, the sending comprising:
   determining another current load on the second link and the third link; and
   upon determining that said another current load on the second link or the third link exceeds a second threshold:
      creating the beacon frame in a manner that excludes the second link or the third link from an RNR element of the beacon frame; and
      sending out the beacon frame on the first link.
6. The method of clause 5 further comprising, upon determining that said another current load on the second link and said another current load on the third link do not exceed the second threshold:
   creating the beacon frame in a manner that includes the second link and the third link in the RNR element of the beacon frame; and
   sending out the beacon frame on the first link.
7. The method of any preceding clause further comprising:
   receiving, from the Wi-Fi client, an MLO association request on the first link, the MLO association request indicating that the Wi-Fi client wishes to associate with the Wi-Fi AP via MLO on the first link, the second link, and the third link;
   determining another current load on the second link and the third link; and
   upon determining that said another current load on the second link or the third link exceeds a second threshold:
      creating an association response that excludes the second link or the third link from a multi-link element (MLE) of the association response; and
      sending the association response to the Wi-Fi client.
8. The method of clause 7 further comprising, upon determining that said another current load on the second link and said another current load on the third link do not exceed the second threshold:
   creating the association response in a manner that includes the second link and the third link in the MLE; and
   sending the association response to the Wi-Fi client.
9. The method of any preceding clause further comprising:
   receiving, from the Wi-Fi client, an MLO association request on the first link, the MLO association request indicating that the Wi-Fi client wishes to associate with the Wi-Fi AP via MLO on the first link, the second link, and the third link;
   determining another current load on the first link, the second link, and the third link; and
   upon determining that said another current load on the first link exceeds said another current loads on the second and third links:
      creating an association response that includes a status code indicating the MLO association request is rejected because the MLO association request includes a loaded link and that identifies the second and third links as a preferable set of links for MLO association; and
      sending the association response to the Wi-Fi client.
10. The method of clause 9 further comprising, upon determining that said another current load on the first link does not exceed said another current loads on the second and third links:
   determining that said another current load on the second link exceeds said another current load on the third link;
   creating the association response in a manner that includes a status code indicating the MLO association request is rejected because the MLO association request includes a loaded link and that identifies the first and third links as a preferable set of links for MLO association; and
   sending the association response to the Wi-Fi client.
11. The method of clause 9 further comprising, upon determining that said another current load on the first link does not exceed said another current loads on the second and third links:
   determining that said another current load on the third link exceeds said another current load on the second link;
   creating the association response in a manner that includes a status code indicating the MLO association request is rejected because the MLO association request includes a loaded link and that identifies the first and second links as a preferable set of links for MLO association; and
   sending the association response to the Wi-Fi client.
12. A Wi-Fi access point (AP) that supports Multi-Link Operation (MLO) on at least three links served by the Wi-Fi AP, the at least three links corresponding to at least three different frequency bands, the Wi-Fi AP comprising:
   a processor; and
   a memory having stored thereon program code that, when executed by the processor, causes the processor to:
      receive, from a Wi-Fi client, a probe request on a first link in the at least three links;
      determine a current load on each of the at least three links; and
      upon determining that the current load on a second link or a third link in the at least three links exceeds a first threshold:
         create a probe response that excludes the second link or the third link from a Reduced Neighbor Report (RNR) element of the probe response; and
         send the probe response to the Wi-Fi client.
13. The Wi-Fi AP of clause 12 wherein the program code further causes the processor to, upon determining that the current load on the first link exceeds a second threshold:
   determine to not send any probe response to the Wi-Fi client.
14. The Wi-Fi AP of clause 12 or clause 13 wherein the program code further causes the processor to:
   send out a beacon frame on the first link by:
   determining another current load on the second link and the third link; and
   upon determining that said another current load on the second link or the third link exceeds a second threshold:
      creating the beacon frame in a manner that excludes the second link or the third link from an RNR element of the beacon frame; and
      sending out the beacon frame on the first link.
15. The Wi-Fi AP of any of clauses 12 to 14 wherein the program code further causes the processor to:
   receive, from the Wi-Fi client, an MLO association request on the first link, the MLO association request indicating that the Wi-Fi client wishes to associate with the Wi-Fi AP via MLO on the first link, the second link, and the third link;
   determine another current load on the second link and the third link; and
   upon determining that said another current load on the second link or the third link exceeds a second threshold:
      create an association response that excludes the second link or the third link from a multi-link element (MLE) of the association response; and
      send the association response to the Wi-Fi client.
16. The Wi-Fi AP of any of clauses 12 to 15 wherein the program code further causes the processor to:
   receive, from the Wi-Fi client, an MLO association request on the first link, the MLO association request indicating that the Wi-Fi client wishes to associate with the Wi-Fi AP via MLO on the first link, the second link, and the third link;
   determine another current load on the first link, the second link, and the third link; and
   upon determining that said another current load on the first link exceeds said another current loads on the second and third links:
      create an association response that includes a status code indicating the MLO association request is rejected because the MLO association request includes a loaded link and that identifies the second and third links as a preferable set of links for MLO association; and
      send the association response to the Wi-Fi client.
17. The Wi-Fi AP of clause 16 wherein the program code further causes the processor to, upon determining that said another current load on the first link does not exceed said another current loads on the second and third links:
   determine that said another current load on the second link exceeds said another current load on the third link;
   create the association response in a manner that includes a status code indicating the MLO association request is rejected because the MLO association request includes a loaded link and that identifies the first and third links as a preferable set of links for MLO association; and
   send the association response to the Wi-Fi client.
18. The Wi-Fi AP of clause 16 or clause 17 wherein the program code further causes the processor to, upon determining that said another current load on the first link does not exceed said another current loads on the second and third links:
   determine that said another current load on the third link exceeds said another current load on the second link;
   create the association response in a manner that includes a status code indicating the MLO association request is rejected because the MLO association request includes a loaded link and that identifies the first and second links as a preferable set of links for MLO association; and
   send the association response to the Wi-Fi client.
19. A method performed by a Wi-Fi access point (AP) that supports Multi-Link Operation (MLO) on a set of links served by the Wi-Fi AP, the method comprising:
   receiving, from a Wi-Fi client, a probe request on a first link in the set of links;
   determining a current load on each link in the set of links; and
   upon determining that the current load on a second link in the set of links exceeds a threshold:
      creating a probe response that excludes the second link from a portion of the probe response; and
      sending the probe response to the Wi-Fi client.
20. The method of clause 19 wherein the set of links includes 2.4 gigahertz (GHz), 5 GHz, and 6 GHz links.

## Claims

1. A method performed by a Wi-Fi access point, AP, that supports Multi-Link Operation, MLO, on a set of links served by the Wi-Fi AP, the method comprising:
receiving, from a Wi-Fi client, a probe request on a first link in the set of links;
determining a current load on each link in the set of links; and
upon determining that the current load on a second link in the set of links exceeds a first threshold:
creating a probe response that excludes the second link from a portion of the probe response; and
sending the probe response to the Wi-Fi client.

2. The method of claim 1 further comprising, upon determining that the current load on the second link does not exceed the first threshold:
creating the probe response in a manner that includes the second link in the portion of the probe response; and
sending the probe response to the Wi-Fi client.

3. The method of claim 1 or claim 2 further comprising, upon determining that the current load on the first link exceeds a second threshold:
determining to not send any probe response to the Wi-Fi client.

4. The method of any preceding claim wherein determining the current load on each link in the set of links comprises:
evaluating a current channel utilization on each of the links; and
detecting an amount of interference currently present on each of the links.

5. The method of any preceding claim, wherein the portion of the probe response is a Reduced Neighbor Report, RNR, element.

6. The method of any preceding claim, wherein the set of links comprises at least three links corresponding to at least three difference frequency bands.

7. The method of claim 6 further comprising:
sending out a beacon frame on the first link, the sending comprising:
determining another current load on the second link and a third link of the set of links; and
upon determining that said another current load on the second link or the third link exceeds a second threshold:
creating the beacon frame in a manner that excludes the second link or the third link from a Reduced Neighbor Report, RNR, element of the beacon frame; and
sending out the beacon frame on the first link.

8. The method of claim 7 further comprising, upon determining that said another current load on the second link and said another current load on the third link do not exceed the second threshold:
creating the beacon frame in a manner that includes the second link and the third link in the RNR element of the beacon frame; and
sending out the beacon frame on the first link.

9. The method of any of claims 6 to 8 further comprising:
receiving, from the Wi-Fi client, an MLO association request on the first link, the MLO association request indicating that the Wi-Fi client wishes to associate with the Wi-Fi AP via MLO on the first link, the second link, and a third link in the set of links;
determining another current load on the second link and the third link; and
upon determining that said another current load on the second link or the third link exceeds a second threshold:
creating an association response that excludes the second link or the third link from a multi-link element, MLE, of the association response; and
sending the association response to the Wi-Fi client.

10. The method of claim 9 further comprising, upon determining that said another current load on the second link and said another current load on the third link do not exceed the second threshold:
creating the association response in a manner that includes the second link and the third link in the MLE; and
sending the association response to the Wi-Fi client.

11. The method of any of claims 6 to 10 further comprising:
receiving, from the Wi-Fi client, an MLO association request on the first link, the MLO association request indicating that the Wi-Fi client wishes to associate with the Wi-Fi AP via MLO on the first link, the second link, and a third link in the set of links;
determining another current load on the first link, the second link, and the third link; and
upon determining that said another current load on the first link exceeds said another current loads on the second and third links:
creating an association response that includes a status code indicating the MLO association request is rejected because the MLO association request includes a loaded link and that identifies the second and third links as a preferable set of links for MLO association; and
sending the association response to the Wi-Fi client.

12. The method of claim 11 further comprising, upon determining that said another current load on the first link does not exceed said another current loads on the second and third links:
determining that said another current load on the second link exceeds said another current load on the third link;
creating the association response in a manner that includes a status code indicating the MLO association request is rejected because the MLO association request includes a loaded link and that identifies the first and third links as a preferable set of links for MLO association; and
sending the association response to the Wi-Fi client.

13. The method of claim 11 further comprising, upon determining that said another current load on the first link does not exceed said another current loads on the second and third links:
determining that said another current load on the third link exceeds said another current load on the second link;
creating the association response in a manner that includes a status code indicating the MLO association request is rejected because the MLO association request includes a loaded link and that identifies the first and second links as a preferable set of links for MLO association; and
sending the association response to the Wi-Fi client.

14. The method of any preceding claim, wherein the set of links comprises 2.4 gigahertz (GHz), 5 GHz, and 6 GHz links.

15. A Wi-Fi access point, AP, that supports Multi-Link Operation, MLO, on a set of links served by the Wi-Fi AP, the Wi-Fi AP comprising:
at least one processor; and
a memory having stored thereon program code that, when executed by the at least one processor, causes the at least one processor to perform a method as set out in at least one of claims 1 to 14.
